# EUROPEAN PATENT APPLICATION

(11) **EP 4 786 665 A1**
(43) Date of publication of application: **05.08.2026**
(21) Application number: 26186536.4
(22) Date of filing: 07.10.2021
(51) Int. Cl.: D04H 1/4218, D04H 1/58, B32B 5/02, B32B 13/14, C09D 129/04, E04C 2/04, E04C 2/20, C09D 5/00, C09D 7/61

(54) **COATED NONWOVEN MAT WITH COATING LAYER**

(30) Priority: 07.10.2020 US 202063088492 P
(62) Divisional of application: 21801769.7
(71) Applicant: Owens Corning Intellectual Capital, LLC, Toledo, OH 43659 (US)
(72) Inventor: POLEN, Shane, Columbus, Ohio, 43205 (US)
(74) Representative: Lawrie IP Limited

(57) **Abstract**

A coated nonwoven mat includes a nonwoven base layer formed from a plurality of fibers held together by a binder. The nonwoven base layer includes a first surface and a second surface. The coated nonwoven mat includes a coating layer adhered to the first surface. The coating layer includes a coating composition having less than 5% of organic material, based on the weight of the coating composition.

## Description

### RELATED APPLICATIONS

This application claims priority to and all benefit of U.S. Provisional Patent Application No. 63/088,492, filed on October 7, 2020, the entire disclosure of which is fully incorporated herein by reference.

### FIELD

The general inventive concepts relate to non-woven fibrous mats and, more particularly, to coated nonwoven fibrous mats that include a coating.

### BACKGROUND

Conventional glass fibers are useful in a variety of applications including reinforcements, building materials, textiles, and acoustical and thermal insulation materials. Nonwoven mats may be made from the fibers by conventional wet-laid processes, wherein wet chopped fibers are dispersed in a water slurry that contains surfactants, viscosity modifiers, defoaming agents, and/or other chemical agents. The slurry containing the fibers is delivered onto a moving screen where a substantial portion of the water is removed, leaving behind a web comprising the fibers and the various chemical agents in the slurry adhered to the fibers. A binder is then applied to the web, and the resulting mat is dried to remove any remaining water and cure the binder. The formed nonwoven mat is an assembly of dispersed, individual chopped fibers.

The binder composition works as an adhesive to bind the fibers together to form a cohesive product, while also improving the product's properties, such as form recovery, stiffness, acoustical openness, porosity, and structure.

Wall boards, such as gypsum or foam coated board panels, are used in building construction to form the partitions or walls of rooms, hallways, ceilings, and the like. Similar boards are also used in exterior wall or roof construction, such as sheathing or roof deck. Such coated boards may include facing or back mats, such as fiberglass or other woven or nonwoven mats, on one or both faces to enhance the performance properties of the board, such as board strength, rigidity, weather durability, and moisture or mold resistance. Such woven or nonwoven mats may be manufactured in-line with the wall board or independently thereof.

Conventional nonwoven mats generally have a porous structure such that materials, particularly liquid materials, applied to the nonwoven mats tend to bleed through from one surface of the nonwoven mat to the opposing surface of the nonwoven mat. Various solutions have been attempted to combat bleed through, including the use of coating layers applied onto the nonwoven mats.

Conventional coating compositions include various formulations that typically include mineral pigments, fillers, and various additives, which are then bound together with an organic binder such as an acrylic. Conventionally, the minimum amount of organic content in the coating (*i.e.,* the binder, dispersant, rheology modifier, etc.) is about 5 wt.%, based on the weight of the entire coating layer. For example, U.S. Patent Publication No. 2009/0104425 discloses a coating composition with 85% to 95% by weight filler, approximately 5% to 10% by weight organic binder, and approximately 1% to 3% by weight additives (e.g., modifiers, surfactants, etc.), based on the weight of the total solids of the coating composition. Such coating compositions typically require that the filler material have a small particle size (i.e., below 5 microns) in order to achieve sufficient porosity. However, both the acrylic binder and small particle size filler are expensive materials.

Decreasing the amount of organic material and added components in the coating composition can decrease cost and overall flammability of the coating. Accordingly, it would be desirable to provide more cost and time effective solutions to reducing the porosity and bleed through in nonwoven mats and mat-faced panels.

### SUMMARY

Various aspects of the present inventive concepts are directed to a coated nonwoven mat that includes a nonwoven base layer formed from a plurality of fibers held together by a binder. The nonwoven base layer includes a first surface and a second surface. The coated nonwoven mat includes a coating layer adhered to the first surface. The coating layer includes a coating composition. In any of the exemplary embodiments, the coating composition may include 0.5% to 5.0% of a binder material, based on the weight of the total solids in the coating composition. In any of the exemplary embodiments, the coating composition may include 95.0% to 99.5% of inorganic mineral filler, based on the weight of the total solids in the coating composition. In any of the exemplary embodiments, the coating composition includes less than 5% of organic material, based on the weight of the total solids in the coating composition.

In any of the exemplary embodiments, the binder material may be an organic polymeric binder material. In any of the exemplary embodiments, the coating composition may comprise one or more of a polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof. In any of the exemplary embodiments, the inorganic mineral filler comprises one or more of ground limestone (calcium carbonate), clay (kaolin), sand, mica, talc, gypsum (calcium sulfate dihydrate), aluminum trihydrate (ATH), vermiculite, wollastonite or antimony oxide.

In any of the exemplary embodiments, the inorganic mineral filler may comprise particles having an average particle size of 15 microns to 30 microns, including 20 microns to 25 microns. In any of the exemplary embodiments, the inorganic mineral filler may comprise particles having an average particle size of 0.01 microns to 15 microns, such as an average particle sizes of 1 micron to 8 microns or 3 microns to 5 microns. In any of the exemplary embodiments, the coating composition may optionally comprise 0.1% to 4.5% of a cross linking agent, based on the weight of the total solids in the coating composition. Additionally, the coating composition may optionally comprise 0.1% to 4.5% of an acrylic component, based on the weight of the total solids in the coating composition. In any of the exemplary embodiments, the acrylic component may comprise a polymer or copolymer of acrylic acid, methacrylic acid, acrylates, methacrylates, acrylonitrile, vinyl versatate, and combinations thereof.

In some embodiments, the coating composition my comprise 0.5% to 4.8% of the binder, 0.1% to 4.4% of a cross linking agent, and 0.1% to 4.4% of an acrylic component, based on the weight of the total solids in the coating composition. In these or other embodiments, the coating composition further includes an inorganic mineral filler blend of any of calcium carbonate, ATH, clay, and/or mica. In any of the exemplary embodiments, the mineral filler may be a blend of at least two components, wherein the average particle size of each of the components is 15 microns to 30 microns. In any of the exemplary embodiments, the filler is a blend of at least two components, wherein the average particle size of a first component is .01 microns to 15 microns, and the average particle size of a second component is 15 microns to 30 microns. In any of the exemplary embodiments, the calorific value of the coating composition may be less than 1.00 MJ/kg.

Further aspects of the present inventive concepts are directed to a method of making a coated nonwoven mat. The method includes providing a nonwoven base layer formed from a plurality of fibers held together by a binder, the nonwoven base layer having a first surface and a second surface. A coating composition is then applied to the first surface of the nonwoven base layer to form a coating layer on the nonwoven base layer. The coating layer can include a coating composition. In any of the exemplary embodiments, the coating composition includes 0.5% to 5.0% of a binder material, based on the weight of the total solids in the coating composition. In any of the exemplary embodiments, the coating composition includes less than 5% of organic material, based on the weight of the coating composition.

As mentioned above, the binder material may be an organic or inorganic polymeric binder material, such as polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.

In any of the exemplary embodiments, the coating composition may include 95.0% to 99.5% of inorganic mineral filler, based on the weight of the total solids in the coating composition. The inorganic mineral filler may comprise one or more of ground limestone (calcium carbonate), clay (kaolin), sand, mica, talc, gypsum (calcium sulfate dihydrate), aluminum trihydrate (ATH), vermiculite, or antimony oxide. In any of the exemplary embodiments, the inorganic mineral filler may comprise particles having an average particle size of 15 microns to 30 microns, such as an average particle size of 20 microns to 25 microns. In any of the exemplary embodiments, the inorganic mineral filler may comprises particles having an average particle size of 0.01 microns to 15 microns, such as an average particle size of 1 micron to 8 microns or 3 microns to 5 microns.

In any of the exemplary embodiments, the coating composition may comprise 0.1% to 4.5% of a cross linking agent and 0.1% to 4.5% of an acrylic component, based on the weight of the total solids in the coating composition. The acrylic component may comprise a polymer or copolymer of acrylic acid, methacrylic acid, acrylates, methacrylates, acrylonitrile, vinyl versatate, and combinations thereof.

In any of the exemplary embodiments, the coating composition may comprise 0.5% to 4.8% of the binder, 0.1% to 4.4% of a cross linking agent, and 0.1% to 4.4% of an acrylic component, based on the weight of the total solids in the coating composition. In these or other embodiments, the coating composition further includes an inorganic mineral filler blend of any of calcium carbonate, ATH, clay, and/or mica. In any of the exemplary embodiments, the filler may be a blend of at least two components, wherein the average particle size of each of the components is 15 microns to 30 microns. In any of the exemplary embodiments, the filler may be a blend of at least two components, wherein the average particle size of a first component is .01 microns to 15 microns, wherein the average particle size of a second component is 15 microns to 30 microns. In any of the exemplary embodiments, the calorific value of the coating composition is less than 1.00 MJ/kg.

### BRIEF DESCRIPTION OF THE DRAWINGS

The subject matter of the present disclosure is particularly pointed out and distinctly claimed in the concluding portion of the specification. A more complete understanding of the disclosure, however, may best be obtained by referring to the detailed description and claims when considered in connection with the figures, wherein like numerals denote like elements.

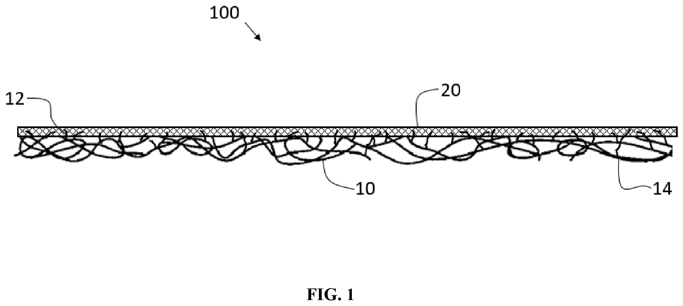

FIG. 1 illustrates a cross-sectional view of an exemplary embodiment of a coated nonwoven mat of the present disclosure.

### DETAILED DESCRIPTION

Unless otherwise defined, all technical and scientific terms used herein have the same meaning as commonly understood by one of ordinary skill in the art to which this application pertains. Although other methods and materials similar or equivalent to those described herein may be used in the practice or testing of the exemplary embodiments, exemplary suitable methods and materials are described below. In case of conflict, the present specification including definitions will control. In addition, the materials, methods, and examples are illustrative only and not intended to be limiting of the general inventive concepts.

The terminology as set forth herein is for description of the exemplary embodiments only and should not be construed as limiting the application as a whole. Unless otherwise specified, "a," "an," "the," and "at least one" are used interchangeably. Furthermore, as used in the description of the application and the appended claims, the singular forms "a," "an," and "the" are inclusive of their plural forms, unless contradicted by the context surrounding such.

Unless otherwise indicated, all numbers expressing quantities used in the specification and claims are to be understood as being modified in all instances by the term "about." The term "about" means within +/- 10% of a value, or in some instances, within +/-5% of a value, and in some instances within +/- 1% of a value.

To the extent that the term "includes" or "including" is used in the description or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." Thus, use of the term "or" herein is the inclusive, and not the exclusive use.

Unless otherwise indicated, any element, property, feature, or combination of elements, properties, and features, may be used in any embodiment disclosed herein, regardless of whether the element, property, feature, or combination of elements, properties, and features was explicitly disclosed in the embodiment. It will be readily understood that features described in relation to any particular aspect described herein may be applicable to other aspects described herein provided the features are compatible with that aspect. In particular: features described herein in relation to the method may be applicable to the fibrous product and *vice versa;* features described herein in relation to the method may be applicable to the aqueous binder composition and *vice versa;* and features described herein in relation to the fibrous product may be applicable to the aqueous binder composition and *vice versa.*

Every numerical range given throughout this specification and claims will include every narrower numerical range that falls within such broader numerical range, as if such narrower numerical ranges were all expressly written herein.

The terms "binder," "binder composition," and "curable composition," as used herein, are used interchangeably and refer to a material that holds one or more components of a nonwoven article together. Those of ordinary skill in the art will understand that a binder composition is often an aqueous mixture or solution of dissolved ingredients that cures to interconnect fibers together.

The terms "binder solids" or "binder components," as used herein, are used interchangeably and refer to the functional ingredients of the binder composition prior to addition or mixing with water to form the ultimate binder for application to the inorganic fibers.

The terms "nonwoven," "mat," "veil," and "facer" are used interchangeably herein and refer to a bound web of fibers.

The term "organic solids" and "organic components" as used herein, are used interchangeably and refer to the organic ingredients of the coating, including, for example, the coating binder and any additional organic components (e.g., dispersant, rheology modifier, etc.).

The term "non-organic solids" and "non-organic components" as used herein, are used interchangeably and refer to the non-organic ingredients of the coating composition, including, for example, the filler.

While the general inventive concepts are susceptible of embodiment in many different forms, there are shown in the drawings, and will be described herein in detail, specific embodiments thereof with the understanding that the present disclosure is to be considered as an exemplification of the principles of the general inventive concepts. Accordingly, the general inventive concepts are not intended to be limited to the specific embodiments illustrated herein.

The general inventive concepts relate to a coated nonwoven mat and methods of making a coated nonwoven mat. The coated nonwoven mat generally includes a fibrous nonwoven base layer and a coating layer that reduces the porosity of the nonwoven base layer. The coating composition can include organic components including, for example, binder components, dispersants, surfactants, rheology modification agents, viscosity modification agents, etc. The organic components can include a be present in the coating composition in an amount no greater than 5% by weight, preferably between about 1% and 4% by weight, based on the weight of the total solids in the coating composition, while still providing acceptable Gurley porosity and other performance-related properties.

The coating composition may be deposited onto the nonwoven base layer formed from a plurality of fibers held together by a binder. In some exemplary embodiments, the coating layer provides an impervious (e.g., water impervious), or substantially impervious barrier such that when a material, particularly a liquid material, is applied to a surface of the coated nonwoven mat opposite the coating layer, the material is at least partially hindered from passing through the coated nonwoven mat by the coating layer.

### Nonwoven Base Layer

In accordance with any of the exemplary embodiments, a coated nonwoven mat 100 is provided in FIG 1. The coated nonwoven mat 100 comprises a nonwoven base layer 10 having a first major surface 12 and a second major surface 14, opposite the first major surface. The nonwoven base layer 10 may be formed by a variety of processes, including wet-laid processes and dry-laid processes. In any of the exemplary embodiments, the nonwoven base layer 10 may be formed by a wet-laid process, which involves forming an aqueous slurry of discrete fibers in a mix tank filled with various components (sometimes referred to as white water), such as water, surfactants, viscosity modifiers, defoaming agents, lubricants, biocides, and/or other chemical agents. Agitation of the white water promotes dispersion of the fibers (e.g., chopped glass fibers) therein, to form a chopped glass fiber slurry. It is desirable that the slurry is agitated sufficiently to achieve a uniform or nearly uniform dispersion of the fibers.

The aqueous fiber dispersion or slurry may then be processed into a wet-laid mat according to any number of conventional methods known in the art. For example, the aqueous fiber slurry is deposited onto a moving screen or conveyor, on which the majority of the water drains through, leaving a randomly oriented fiber web. The fiber web may be further dried by a vacuum slot or other drying means. A binder composition may then be applied to the fiber web in a conventional manner, such as by curtain coating, spraying, twin wire dip bath, two roll padder, and the like. Water and excess binder composition may then be removed by a vacuum or other water removal means.

Finally, the fiber product may be dried and cured in one or more ovens. An exemplary temperature range for drying is from 350 °F (177 °C) to 600 °F (316 °C). The dried and cured product is the finished nonwoven base layer 10.

The nonwoven base layer 10 of the present disclosure may be formed from a variety of materials. In general, the nonwoven base layer 10 comprises a plurality of fibers and a base layer binder composition that binds the fibers together. Exemplary fibers for forming the nonwoven base layer 10 include, but are not limited to, glass fibers, synthetic fibers (*e.g.,* polyester fibers, polyethylene fibers, polypropylene fibers, polyethylene terephthalate fibers, polyamide fibers, aramid fibers, polyaramid fibers), mineral fibers, carbon fibers, ceramic fibers, natural fibers (e.g., cellulose fibers, cotton fibers, jute fibers, bamboo fibers, ramie fibers, bagasse fibers, hemp fibers, coir fibers, linen fibers, kenaf fibers, sisal fibers, flax fibers, henequen fibers), or a blend of two or more different types of fibers.

In any of the exemplary embodiments, the nonwoven base layer 10 comprises glass fibers. The glass fibers can be made from any type of glass. Exemplary glass fibers include, but are not limited to, A-type glass fibers, C-type glass fibers, E-type glass fibers, S-type glass fibers, ECR-type glass fibers (e.g., Advantex^{®} glass fibers commercially available from Owens Corning of Toledo, Ohio), Hiper-tex^{®} glass fibers, high-performance glass fibers, wool glass fibers, and combinations thereof.

The glass fibers used to form the nonwoven base layer 10 may have a variety of fiber diameters. In certain embodiments, the glass fibers used to form the nonwoven base layer 10 have an average fiber diameter of 5.5 microns to 23 microns. In any of the exemplary embodiments, the glass fibers used to form the nonwoven base layer 10 have an average fiber diameter of 3 microns to 18 microns, including between 6 microns and 16 microns, or between 11 microns and 13 microns. It is also contemplated that a blend of glass fibers having different fiber diameters, such as a blend of smaller diameter glass fibers (e.g., average fiber diameter of 5.5 microns to 10 microns) and larger diameter glass fibers (e.g., average fiber diameter of 13 microns to 16 microns), may be used to form the nonwoven base layer 10. In any of the exemplary embodiments, the nonwoven base layer 10 may comprise a blend of fibers wherein 70% of the fibers have an average fiber diameter of 13 microns and 30% of the fibers have an average fiber diameter of 11 microns.

The glass fibers used to form the nonwoven base layer 10 may also have a variety of fiber lengths. In any of the exemplary embodiments, the glass fibers used to form the nonwoven base layer 10 have an average fiber length of 6.35 mm to 50.8 mm. In any of the exemplary embodiments, the glass fibers used to form the nonwoven base layer 10 have an average fiber length of 12.7 mm to 38.1 mm, including an average fiber length of 19.05 mm to 25.4 mm. It is also contemplated that a blend of glass fibers having different fiber lengths, such as a blend of shorter glass fibers (e.g., average fiber length of 6.35 mm to 12.7 mm) and longer glass fibers (e.g., average fiber length of 19.05 mm to 31.75 mm), may be used to form the nonwoven base layer 10.

As mentioned above, the nonwoven base layer 10 also includes a binder composition to bind the fibers of the nonwoven base layer 10 together. Any conventional binder composition used to form nonwoven mats may be used to form the nonwoven base layer 10 of the present disclosure. In any of the exemplary embodiments, the nonwoven base layer 10 comprises from 1% to 35% by weight binder composition, based on the total weight of the nonwoven base layer 10. In any of the exemplary embodiments, the nonwoven base layer 10 comprises from 5% to 30% by weight binder composition, including from 10% to 25% by weight binder composition, and also including from 15% to 23% by weight binder composition, based on the total weight of the nonwoven base layer 10. As one of skill in the art will appreciate, the amount of binder composition used to form the nonwoven base layer 10 may be determined by measuring loss on ignition ("LOI").

In any of the exemplary embodiments, the binder composition comprises a resin material, a coupling agent, and one or more optional additives. The resin may be a thermoset material, a thermoplastic material, or a mixture of a thermoset material and a thermoplastic material. In any of the exemplary embodiments, the resin material may comprise one or more of an acrylic material, styrene-acrylic material, styrene butadiene, a urea formaldehyde material, a melamine formaldehyde material, or a combination thereof. In any of the exemplary embodiments, the acrylic material is polyacrylic acid, such as low molecular weight polyacrylic acid with a weight average molecular weight at or below 10,000 Daltons.

In any of the exemplary embodiments, the resin may be present in the binder composition in an amount of 90% to 99% by weight, based on the total solids in the binder composition. In certain other embodiments, the resin may be present in the binder composition in an amount of 97% to 99% by weight, based on the total solids in the binder composition.

The binder composition may further include a coupling agent. It is to be appreciated that the coupling agents described herein are exemplary in nature, and any suitable coupling agent known to those of ordinary skill in the art may be utilized in any of the exemplary embodiments described or otherwise suggested herein. In any of the exemplary embodiments, the coupling agent, or coupling agents, may be present in the base layer binder composition in an amount of 0.05% to 10% by weight, based on the total solids in the binder composition. In any of the exemplary embodiments, the coupling agent, or coupling agents, may be present in the binder composition in an amount of 0.1% to 3% by weight, including in an amount of 0.15% to 0.5% by weight, based on the total solids in the base layer binder composition.

In any of the exemplary embodiments, at least one of the coupling agents is a silane coupling agent. Suitable silane coupling agents may include silanes containing one or more nitrogen atoms that have one or more functional groups such as amine (primary, secondary, tertiary, and quaternary), amino, imino, amido, imido, ureido, or isocyanato. Suitable silane coupling agents may also include, but are not limited to, aminosilanes, silane esters, vinyl silanes, methacryloxy silanes, epoxy silanes, sulfur silanes, ureido silanes, and isocyanato silanes. Specific, non-limiting examples of silane coupling agents for use in the instant invention include γ-methacryloxypropyl-trimethoxysilane (A-174), γ-aminopropyltriethoxysilane (A-1100), n-phenyl-γ-aminopropyltrimethoxysilane (Y-9669), n-trimethoxy-silyl-propyl-ethylene-diamine (A-1120), methyl-trichlorosilane (A-154), γ-chloropropyl-trimethoxy-silane (A-143), vinyl-triacetoxysilane (A-188), and methyltrimethoxysilane (A-1630).

The binder composition used to form the nonwoven base layer 10 of the present disclosure may optionally include additional components such as, for example, dyes, oils, fillers, colorants, aqueous dispersions, UV stabilizers, lubricants, wetting agents, surfactants, viscosity modifiers, and/or antistatic agents. Such additives may be included in the base layer binder composition in an amount of 0% percent to 10% based on the total weight of the base layer binder composition.

In any of the exemplary embodiments, the binder composition used to form the nonwoven base layer 10 of the present disclosure may include water to dissolve or disperse the functional components for application onto the fibers. Water may be added in an amount sufficient to dilute the aqueous binder composition to a viscosity that is suitable for its application to the fibers.

The nonwoven base layer 10 may have a wide range of basis weights (uncoated). In certain embodiments, the nonwoven base layer 10 has an uncoated basis weight of 25 g/m² to 300 g/m². In any of the exemplary embodiments, the nonwoven base layer 10 has an uncoated basis weight of 30 g/m² to 200 g/m², including from 40 g/m² to 150 g/m², from 50 g/m² to 100 g/m², from 55 g/m² to 80 g/m², and 65 g/m² to 75 g/m². In still other embodiments, the nonwoven base layer 10 has an uncoated basis weight of 73 g/m².

The nonwoven base layer 10 may also have a variety of thicknesses. In any of the embodiments, the nonwoven base layer 10 has a thickness of 0.25 mm to 2 mm. For instance, the nonwoven base layer 10 may have a thickness of 0.3 mm to 0.7 mm, including a thickness of 0.3 mm to 0.6 mm, a thickness of 0.75 mm to 2 mm, a thickness of 1 mm to 2 mm, a thickness of 1.25 mm to 1.9 mm, and also including a thickness of 1.5 mm to 1.8 mm.

As mentioned above, the amount of binder composition present in the coated nonwoven mats of the present disclosure may be determined by measuring loss on ignition ("LOI"). The coated nonwoven mat 100 of the present disclosure may have a wide range of LOI. In any of the exemplary embodiments, the nonwoven base layer 10 has a LOI of 5%-75%. In certain embodiments, the coated nonwoven mat 100 has a LOI of 15%-60%, including between 30% and 50%, and between 40%-45%.

### Coating Composition

Referring again to FIG. 1, the coated nonwoven mat 100 includes a coating layer 20 comprising a coating composition adhered to the first surface 12 of the nonwoven base layer 10. The coating layer 20 is preferably applied to the first surface 12 of the nonwoven base layer 10 using a coating process, as described in further detail below.

As seen in FIG. 1, the coating layer 20 extends partially into the nonwoven base layer 10 (*i.e.,* partially through a thickness of the nonwoven base layer 10 measured from the first surface 12 to the second surface 14). In any of the exemplary embodiments, the coating layer 20 may extend into the nonwoven base layer 10 in an amount of up to 75% of the thickness of nonwoven base layer 10 (measured from the first surface 12 to the second surface 14). In any of the exemplary embodiments, the coating layer 20 may extend into the nonwoven base layer 10 in an amount of up to 50% of the thickness of nonwoven base layer 10 (measured from the first surface 12 to the second surface 14). In any of the exemplary embodiments, the coating layer 20 may extend into the nonwoven base layer 10 in an amount of 10% to 50% of the thickness of nonwoven base layer 10 (measured from the first surface 12 to the second surface 14), and also including from 5% to 25% of the thickness of nonwoven base layer 10 (measured from the first surface 12 to the second surface 14). In any of the exemplary embodiments, the second surface 14 of the nonwoven base layer 10 is free of a coating composition. It should be appreciated that the thickness to which the coating layer 20 extends into the nonwoven base layer 10 may vary somewhat along the width and/or length of the nonwoven base layer 10, or the coating layer 20 may extend into the nonwoven base layer in a uniform or at least substantially uniform manner.

The coating layer 20 comprises a coating composition that includes various components. As mentioned above, conventional coating compositions comprise organic components comprising, for example, binder components, dispersants, surfactants, rheology modification agents, viscosity modification agents, etc., in amounts greater than 5% by weight solids in order to achieve a coated nonwoven mat with sufficient mechanical properties. However, the inventors have surprisingly developed a coating composition with less than 5% by weight of organic components, based on the total solids in the coating composition, that can still provide a coated nonwoven mat with sufficient properties, due to a particular combination of components.

Particularly, the coating composition includes a binder material which, in some exemplary embodiments, comprises a polymeric binder material. In any of the exemplary embodiments, the binder material is an organic polymeric binder material. The binder material of the coating composition may comprise, for example, polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.

In any of the exemplary embodiments, the binder material of the coating composition may represent 0.5% to 5.0% by weight of the total solids in the coating composition, including greater than 0.5% to less than 5.0% by weight of the total solids in the coating composition. In various exemplary embodiments, the binder component of the coating composition represents 0.75% to 4.8% by weight of the total solids in the coating composition. In various exemplary embodiments, the binder component of the coating composition represents 1.0% to 4.5% by weight, including between 1.3% and 4.2% by weight, 1.5% to 4.0% by weight, 1.8% to 3.6% by weight, and 2.0% to 3.2% by weight of the total solids in the coating composition. In various embodiments, the binder component of the coating composition represents about 2.2% to 2.6% by weight of the coating composition.

The coating composition further comprises non-organic components. The non-organic components can include, for example, one or more inorganic mineral fillers, including, but not limited to, ground limestone (calcium carbonate), clay (kaolin), sand, mica, talc, gypsum (calcium sulfate dihydrate), aluminum trihydrate (ATH), vermiculite, antimony oxide, or a combination of any two or more of these substances.

In any of the exemplary embodiments, the inorganic mineral fillers represent 93% to 99% by weight of the coating composition. In various embodiments, the inorganic mineral fillers represent 95% to 98.7%, 95.5% to 98.5% by weight of the total solids in the coating composition. In various embodiments, the inorganic mineral fillers represent 96% to 98% by weight of the total solids in the coating composition, including from 96.5% to 97.5% by weight and from 96.8 to 97.2% by weight of the total solids in the coating composition.

In various embodiments, the inorganic mineral filler may comprise a plurality of particles having an average particle size. As mentioned above, conventional coating compositions include mineral fillers with an average particle size between about 1 and 3 microns. In such conventional coating compositions, if mineral fillers with larger (*i.e.,* above 15 microns) were used, the Gurley air permeability would drop significantly. However, it was surprisingly discovered that mineral fillers having an average particle size of at least 20 microns may be used when combined with the particular binder material disclosed above. Accordingly, the mineral filler may have an average particle size of 15 microns to 30 microns, including between 17 microns and 27 microns, between 20 microns and 25 microns, and between 21 microns and 24 microns.

In any of the exemplary embodiments, the mineral filler may comprise a blend of particles of different average particle sizes. For example, the filler may comprise a blend of smaller particles (e.g., particle size of 1 microns to 12 microns) and larger particles (e.g., average particle size of 13 microns to 25 microns). For example, in any of the exemplary embodiments, the mineral filler may comprise a blend of particles having an average particle size between 1 micron and 3 microns and particles having an average particle size between 19 microns and 22 microns. In any of the exemplary embodiments, the mineral filler may comprise a blend of particles having an average particles size of 3 microns and particles having an average particle size of 20 microns.

In any of the exemplary embodiments, the mineral filler may comprise calcium carbonate having an average particle size of 20 microns to 25 microns. In any of the exemplary embodiments, the mineral filler may comprise a blend of calcium carbonate particles having an average particle size of 3 microns and calcium carbonate particles having an average particle size of 20 microns.

In some instances, the mineral filler comprises a blend of inorganic mineral fillers, such as, for example, one or more of calcium carbonate, ATH, clay, and mica. For example, the mineral filler may include any one or more of a blend of calcium carbonate and ATH; calcium carbonate and clay; calcium carbonate and mica; calcium carbonate, ATH, and clay; calcium carbonate, ATH, and mica; calcium carbonate, mica, and clay; calcium carbonate, ATH, mica, and clay, or the like.

The mineral filler blend may comprise any ratio and combination of components described above. Accordingly, each component of the inorganic mineral filler blend may represent 0 to 100% by weight of the total amount of mineral filler in the coating composition, including any combination and sub-range therebetween. In any of the exemplary embodiments, inorganic mineral filler blend may comprise calcium carbonate in an amount of at least 40 wt.%, based on the total weight of the coating composition, including between 45 wt.% and 100 wt.%, 47 wt.% and 95 wt.%, 50 wt.% and 90 wt.%, 52 wt.% and 85 wt.%, 55 wt.% and 80 wt.%, and 57 wt.% and 75 wt.%, including all sub-ranges and endpoints therebetween.

Additionally, in any of the exemplary embodiments, ATH may optionally be included in the mineral filler blend in an amount between 0 and 50 wt.%, based on the total weight of the coating composition, including between 3.0 wt.% and 40 wt.%, 5.0 wt.% and 35 wt.%, 10 wt.% and 30 wt.%, 15 wt.% and 27 wt.%, and 17 wt.% and 25 wt. %, including all sub-ranges and endpoints therebetween.

As mentioned above, the mineral filler blend may optionally comprise a clay component, such as kaolin clay, in an amount between 0 and 50 wt.%, based on the total weight of the coating composition, including between 2.0 wt.% and 35 wt.%, 3.5 wt.% and 27 wt.%, 5.0 wt.% and 25 wt.%, 10 wt.% and 23 wt.%, and 13 wt.% and 20 wt. %, including all sub-ranges and endpoints therebetween.

The mineral filler blend may further optionally comprise mica in an amount between 0 and 50 wt.%, based on the total weight of the coating composition, including between 1.0 wt.% and 35 wt.%, 3.0 wt.% and 30 wt.%, 5.0 wt.% and 25 wt.%, 7 wt.% and 23 wt.%, and 10 wt.% and 20 wt. %, including all sub-ranges and endpoints therebetween.

As mentioned above, the mineral filler blend may comprise a blend of particles of different average particle sizes. In any of the exemplary embodiments, the mineral filler blend may comprise calcium carbonate having an average particle size between 1.5 micron and 30 micron, including between 3 micron and 25 micron, between 5 micron and 22 micron, between 7 micron and 20 micron, and between 10 micron and 18 micron. In certain exemplary embodiments, the calcium carbonate particles have an average particle size between about 20 and 23 micron. Similarly, if present, the ATH particles and/or mica particles may have an average particle size between 1.5 and 30 micron, including between 2 micron and 25 micron, between 3 micron and 20 micron, between 5 micron and 17 micron, and between 8 micron and 15 micron.

Furthermore, if present, the clay particles may have an average particle size between about 0.05 micron and 5 micron, including between 0.1 and 3 micron, and between 0.2 and 3 micron.

When the mineral filler includes a blend of two or more components, the average particle size of each of the components can be 15 microns to 30 microns. In some instances, one or more components in the mineral filler has an average particle size between 0.1 micron and 15 microns, including all sub-ranges and endpoints therebetween, and one or more components in the mineral filler has an average particle size between 15 micron and 30 microns, including all sub-ranges and endpoints therebetween.

In any of the exemplary embodiments, the coating composition may comprise a two-component system, including only a binder material and an inorganic mineral filler, with a total organic content no greater than, or less than, 5% by weight, based on the total solids in the coating composition.

Alternatively, the coating composition may optionally include one or more organic or non-organic additives, providing the total organic content in the coating composition remains no greater than 5% by weight, based on the total solids in the coating composition. Exemplary additives include, but are not limited to, fire retardants, dyes, pigments, UV stabilizers, antistatic agents, film forming agents, and so forth. Such additives are well known by those of ordinary skill in the art. In various embodiments, the total amount of additives in the coating composition represents 0 to 98% by weight of the total solids in the coating composition. In any of the exemplary embodiments, the total amount of additives in the coating composition may represent 10 to 90% by weight, 25 to 75% by weight, 35 to 65% by weight, or even 40 to 50% by weight of the total solids in the coating composition.

Exemplary fire retardants may include, mineral based (ATH, magnesium hydroxide), halogen based, (TCPP), phosphorus based (APP), and intumescent (expandable graphite) fire retardants. In various embodiments, the mineral based (ATH, magnesium hydroxide) and intumescent (expandable graphite) fire retardants in the coating composition represent 0% to 98% by weight of the coating composition, including 10% to 90% by weight, 15% to 75% by weight, 18% to 65% by weight, or even 20% to 55% by weight of the coating composition.

In any of the exemplary embodiments, the coating composition may optionally include one or more cross-linking agents. The cross-linking agents can be added to the binder material or added separately to the coating composition. In some instances, the cross-linking agent is an organic material, while in other instances, the cross-linking agent is an inorganic material.

Non-limiting examples of suitable cross-linking agents include urethane and polyurethane based products, such as Bemifix, commercially available from Schmits International.

Further exemplary cross-linking agents include carboxylic acid-based materials having one or more carboxylic acid groups (-COOH) or carboxylic acid derivatives, such as monomeric and polymeric polycarboxylic acids, including salts or anhydrides thereof, and mixtures thereof. Exemplary monomeric polycarboxylic acid components include aconitic acid, adipic acid, azelaic acid, butane tetra carboxylic acid dihydrate, butane tricarboxylic acid, chlorendic anhydride, citraconic acid, citric acid, dicyclopentadiene-maleic acid adducts, diethylenetriamine pentacetic acid pentasodium salt, adducts of dipentene and maleic anhydride, endomethylenehexachlorophthalic anhydride, ethylenediamine tetraacetic acid (EDTA), fully maleated rosin, maleated tall oil fatty acids, fumaric acid, glutaric acid, isophthalic acid, itaconic acid, maleated rosin-oxidize unsaturation with potassium peroxide to alcohol then carboxylic acid, malic acid, maleic anhydride, mesaconic acid, oxalic acid, phthalic anhydride, polylactic acid, sebacic acid, succinic acid, tartaric acid, terephthalic acid, tetrabromophthalic anhydride, tetrachlorophthalic anhydride, tetrahydrophthalic anhydride, trimellitic anhydride, trimesic acid, epoxide, polyamide epichlorohydrin, isocyanates, blocked isocynates, carbodiimides, and aziridines.

In any of the exemplary embodiments, the polycarboxylic acid may be a polymeric polycarboxylic acid, such as a homopolymer or copolymer of acrylic acid. The polymeric polycarboxylic acid may comprise polyacrylic acid (including salts or anhydrides thereof) and polyacrylic acid-based resins such as QR-1629S and Acumer 9932, both commercially available from The Dow Chemical Company, polyacrylic acid compositions commercially from CH Polymer, and polyacrylic acid compositions commercially available from Coatex.

In certain exemplary embodiments, the cross linking agent can be a non-organic material. For example, as described in WO 2017/214,083, which is hereby incorporated by reference, the cross linking agent can include one or more metal salts. In certain exemplary embodiments, the metal is at least one of a group 13 element, a post-transition metal, a metalloid, or any other metal that readily coordinates oxygen. In certain embodiments, the metal is selected from boron, aluminum, gallium, indium, tin, thallium, lead, bismuth, zinc, iron, zirconium, and titanium. In certain embodiments, the metal salt may comprise more than one metal, such as, for example, a combination or complex of aluminum and zirconium. In certain exemplary embodiments, the metal salt is comprised of at least one salt of aluminum. In certain exemplary embodiments, the metal salt is selected from the group consisting of aluminum chloride, aluminum nitrate, aluminum sulfate, aluminum phosphate monobasic, sodium aluminate, and combinations thereof.

In any of the exemplary embodiments, the cross linking agents in the coating composition may represent less than 5% by weight of the total solids in the coating composition. In any of the exemplary embodiments, the cross linking agents in the coating composition may represent less than 4% by weight, less than 3% by weight, less than 2% by weight, or even less than 1% by weight of the total solids in the coating composition. In any of the exemplary embodiments, the cross linking agents in the coating composition may represent 0.01% to 5.00% by weight, 0.1% to 4.0% by weight, 0.5% to 2.5% by weight, or even 1% to 2% by weight of the total solids in the coating composition.

In any of the exemplary embodiments, the coating composition may optionally include an acrylic component. The acrylic component can be added to the binder material or added separately to the coating composition. In some instances, the acrylic component is an organic material, while in other instances, the acrylic component is an inorganic material. Non-limiting examples of the acrylic component include polymers or copolymers of acrylic acid, methacrylic acid, acrylates, methacrylates, acrylonitrile, vinyl versatate, and combinations thereof.

In some instances, the acrylic component in the coating composition represents less than 5% by weight of the total solids in the coating composition. In any of the exemplary embodiments, the acrylic component in the coating composition may represent less than 4% by weight, less than 3% by weight, less than 2% by weight, or even less than 1% by weight of the total solids in the coating composition. In any of the exemplary embodiments, the acrylic component in the coating composition may represent 0.01% to 5.00% by weight, 0.1% to 4.0% by weight, 0.5% to 2.5% by weight, or even 1% to 2% by weight of the total solids in the coating composition.

As mentioned above, the organic components in the coating composition represent less than 5% by weight of the total solids in the coating composition. In any of the exemplary embodiments, the organic components in the coating composition may represent less than 4% by weight, less than 3% by weight, less than 2% by weight, or even less than 1% by weight of the total solids in the coating composition.

In any of the exemplary embodiments, the organic components in the coating composition may represent 0.5% to 5.0% by weight of the total solids in the coating composition, such as 0.75% to less than 5 wt.%, 1% to 4% by weight, 2% to 3% by weight, and 2.2% to 2.7% by weight of the total solids in the coating composition.

In some instances, the organic components in the coating composition include just the binder material. For example, the binder material can represent 0.5% to 5.0% by weight of the total solids in the coating composition.

In some instances, the organic components in the coating composition include the binder material and the cross-linking agent. For example, the binder material can represent 0.5% to 4.9% by weight of the total solids in the coating composition, and the cross linking agent can represent 0.1% to 4.5% of the total solids in the coating composition.

In some instances, the organic components in the coating composition include the binder material and the acrylic component. For example, the binder material can represent 0.5% to 4.9% by weight of the total solids in the coating composition, and the acrylic component can represent 0.1% to 4.5% of the total solids in the coating composition.

In some instances, the organic components in the coating composition include the binder material, the cross-linking agent, and the acrylic component. For example, the binder material can represent 0.5% to 4.8% by weight of the total solids in the coating composition, the cross linking agent can represent 0.1% to 4.4% of the total solids in the coating composition, and the acrylic component can represent 0.1% to 4.4% of the total solids in the coating composition.

In any of the exemplary embodiments, the non-organic components in the coating composition may represent greater than 95% by weight of the total solids in the coating composition. In various embodiments, the organic components in the coating composition represent greater than 96% by weight, greater than 97% by weight, greater than 98% by weight, or even greater than 99% by weight of the total solids in the coating composition.

In various embodiments, the non-organic components in the coating composition represent 95% to 99% by weight of the coating composition. In various embodiments, the non-organic components in the coating composition represent 95.5% to 98.5% by weight of the coating composition, including between 96% and 98% by weight, 96.5% and 97.5% by weight, and 96.8 and 97.2% by weight of the total solids in the coating composition.

In any of the exemplary embodiments, the coating composition consists, or consists essentially, of the binder material and the mineral filler. In any of the exemplary embodiments, the coating composition consists essentially of 0.1% to 5% by weight of the binder and the 95% to 99.9% by weight of the filler. In any of the exemplary embodiments, the binder comprises polyvinyl alcohol and the filler comprises calcium carbonate. In any of the exemplary embodiments, the calcium carbonate has a thickness of 22 microns.

In any of the exemplary embodiments, the coating composition includes the following components:

**TABLE 1: Exemplary Coating Compositions**

| Functionality | Exemplary Composition A | Exemplary Composition B | Exemplary Composition C |
|---|---|---|---|
| | Dry Fraction (wt. %) | Dry Fraction (wt. %) | Dry Fraction (wt. %) |
| Calcium Carbonate | 20% - 99% | 40% - 75% | 55% - 70% |
| Clay | 0% - 75% | 10% - 50% | 15% - 25% |
| Mica | 0% - 75% | 0% - 20% | 0% - 15% |
| Fire Retardant | 0% - 75% | 10% - 30% | 15% - 25% |
| PVOH | 0.5% - 5% | 1% - 4.5% | 3% - 4.0% |
| Cross Linking agent | 0% - 4.5% | 0.1% - 2.5% | 0.5% - 1.5% |
| Acrylic Component | 0% - 4.5% | 0% - 4% | 0% - 3% |
| Additives | 0% - 10% | 0% - 8% | 0% - 6% |

The coating composition of the present disclosure may also have a variety of viscosities. In any of the exemplary embodiments, the coating composition has a viscosity of 250 cP (centipoise) to 30,000 cP. In certain embodiments, the coating composition has a viscosity of 500 cP to 20,000 cP, including from 1000 cP to 15,000 cP, 5000 cP to 10,000 cP, and 7000 cP to 8,000 cP.

The coating layer 20 of the present disclosure may be applied in a wide range of coat weights. In any of the embodiments, the coating layer 20 has a coat weight of 10 g/m² to 500 g/m². For example, the coating layer 20 may have a coat weight of 25 g/m² to 250 g/m², including 50 g/m² to 100 g/m², 20 g/m² to 80 g/m², 25 g/m² to 75 g/m², or even 225 g/m² to 275 g/m².

The coating layer 20 of the present disclosure may also have a variety of thicknesses. In any of the exemplary embodiments, the coating layer 20 may have a thickness of 1 micron to 1000 microns. In other embodiments, the coating layer 20 has a thickness of 5 microns to 500 microns. In still other embodiments, the coating layer 20 has a thickness of 10 microns to 250 microns. In still other embodiments, the coating layer 20 has a thickness of 50 microns to 100 microns.

The coating layer 20 of the present disclosure may have a lower calorific value than conventional coating layers. The calorific value refers to the amount of energy released per kilogram of the coating. A lower calorific value is associated with reduced flame spread in standard tests such as E84 (Steiner Tunnel) and UL-94 (vertical and horizontal burn), higher fire ratings, and a reduced need for additional fire retardants. In any of the exemplary embodiments, the coating layer 20 has a calorific value less than 1.5 MJ/kg, such as less than 1.0 MJ/kg, less than 0.6 MJ/kg, and less than 0.4 MJ/kg.

The coating composition may be deposited onto a nonwoven base layer formed from a plurality of fibers held together by a binder. The coating composition may be deposited using a variety of methods. The coating composition may be deposited using methods including knife over plate via dipping bath or knife over roll via dipping bath. Other suitable methods include, but are not limited to, waterfall coating, curtain coating, fountain coating, impregnation coating, brush coating, and spray coating.

The coating layer 20 functions to substantially close off or seal one surface of the coated nonwoven mat 100 of the present disclosure. Thus, the coated nonwoven mat 100 of the present disclosure includes one surface that is porous and permits wetting or penetration by a liquid/flowable material and an opposing surface that is at least substantially sealed to prevent bleed-through of the liquid/flowable material.

Due to the at least substantially closed-off or sealed surface provided by the coating layer 20, the coated nonwoven mat 100 is generally resistant to a liquid bleeding through the mat. The impervious nature of the coated nonwoven mat 100 of the present disclosure may be characterized by its Gurley porosity. Gurley porosity is a measure of the resistance of a material to air permeability. It may be measured in accordance with TAPPI T-460 (Gurley method), or similar methods. This test measures the time required for 100 cubic centimeters of air to be pushed through an approximately 6.45 cm² (1 in²) circular area of sample under a pressure of approximately 1.22 kPa. The result is expressed in seconds and is frequently referred to as Gurley seconds. As the Gurley porosity increases, permeability decreases, and as Gurley porosity decreases, permeability increases.

The coated nonwoven mat 100, when applied as a pre-coated facer in a foam board, may have an average Gurley porosity of at least 100 seconds. In any of the exemplary embodiments, the coated nonwoven mat 100 has an average Gurley porosity of 200 seconds to 30,000 seconds, including an average Gurley porosity of 250 seconds to 20,000 seconds, an average Gurley porosity of 275 seconds to 17,000 seconds, an average Gurley porosity of 300 seconds to 15,000 seconds, an average Gurley porosity of 400 seconds to 13,000 seconds, and also including an average Gurley porosity of 500 seconds to 12,500 seconds.

The coated nonwoven mat 100, when applied as a precoated facer in a gypsum board, may have an average Gurley porosity of 20 seconds to 100 seconds, including an average Gurley porosity of 40 seconds to 60 seconds.

The coated nonwoven mat 100 of the present disclosure may have a wide range of basis weights (total basis weight of the coated nonwoven mat). In any of the exemplary embodiments, the coated nonwoven base layer 10 may have a basis weight of 25 g/m² to 600 g/m². In certain other embodiments, the coated nonwoven base layer 10 has a basis weight of 50 g/m² to 400 g/m². In still other embodiments, the coated nonwoven base layer 10 has a basis weight of 75 g/m² to 200 g/m², including a basis weight of 100 g/m² to 150 g/m², and a basis weight of 115 g/m² to 125 g/m².

### Products

As mentioned above, the coating layer 20 is adhered to the first surface 12 of the nonwoven base layer 10. The extent to which the coating layer 20 is adhered to the first surface 12 of the nonwoven base layer 10 in the coated nonwoven mat 100 may be measured by peel strength. The peel strength of the coated nonwoven mat 100 of the present disclosure may be tested using an Instron Model 3345 device (available from Instron of Norwood, Massachusetts) to carry out a T-peel test with the following parameters: load cell = 100 N; fixture separation = 12.7 mm; sample dimension = 1" width x 6" length (2.54 cm width x 15.24 cm length); and displacement rate = 5.08 mm/s. In any of the embodiments, the peel strength of the coated nonwoven mat 100 of the present disclosure is 140 gram-force to 320 gram-force, including 145 gram-force to 310 gram-force, 150 gram-force to 300 gram-force, 160 gram-force to 250 gram-force, and also including 190 gram-force to 235 gram-force.

Owing to its two different surfaces (*i*.*e*., the closed-off/sealed surface and the porous surface), the coated nonwoven mat 100 of the present disclosure may be used in a variety of applications and products. In on one or more embodiments, the coated nonwoven mat 100 may be used as a precoated facer in a construction board, such as, for example, gypsum board, polymeric foam board, or cement board.

As indicated above, the coated nonwoven mat 100 includes a first side and a second side opposite the first side. In one or more embodiments, a construction board may be attached or bound to the second side of the coated nonwoven mat 100. The construction board has the coated nonwoven mat 100 situated on one side of the construction board and the construction board has an opposing side opposite the coated nonwoven mat 100. In one or more embodiments, the opposing side of the construction board may have a second facer that is the same or different than the coated nonwoven mat 100. In one or more embodiments, the second facer is a paper facer, coated paper facer, foil facer, fiber facer, conventional coated fiber facer, or a second coated nonwoven mat, formed in accordance with the present disclosure. In other embodiments, the opposing side of the construction board may not have a facer.

In one or more embodiments, the coated nonwoven mat 100 may be included in a polymeric foam board. The foam board includes a foam core with two opposing sides and at least one coated nonwoven mat 100 situated on one of the opposing sides. Suitable foams for use in the foam board include polyurethane, polystyrene, and polyisocyanurate foams. Polyisocyanurate and polyurethane foam compositions have three major components: a polyfunctional isocyanate compound, a polyol and a blowing agent. When these three components are mixed, along with small amounts of catalysts and surfactants, a heat-generating chemical reaction causes the liquid blowing agent to boil. The resultant blowing agent vapor expands the foam to create gas-filled cells.

In one or more embodiments, the foam may be described by the isocyanate index. Those skilled in the art will appreciate that the isocyanate index is the actual number of isocyanate groups (NCO) used in the foam composition divided by the number of theoretical number of isocyanate groups required to react with the isocyanate redactable groups (polyols and H₂O) multiplied by 100. When the number of NCO group equals the number of OH group in a formulation, a stoichiometric NCO:OH ratio of 1.0 is realized and a polyurethane polymer/foam is produced. When the number of NCO groups is significantly more than the number of OH groups in a formulation, the excess isocyanate group reacts with itself under catalytic condition to form isocyanurate linkage and polyisocyanurate foam is produced. Typically, when the foam has an isocyanate index greater than about 200 the foam is considered a polyisocyanurate. An index of between about 250 and about 270, provides at least a 2:1 ratio of NCO groups to OH groups, which has been found to provide an appreciable combination of structure integrity, thermal strength and/or stability, and fire resistance.

As those skilled in the art will appreciate, polyisocyanurate or polyurethane foam may be prepared from separate reaction mixtures, typically refereed to an A-side stream and a B-side stream. The A-side stream includes the polyfunctional isocyanate compound, and the B-side stream includes the components reactive with the polyfunctional isocyanate compound (i.e. the polyol or other molecules that include OH groups). The blowing agent is typically included in the B-side. In one or more embodiments, a foam board that includes a coated facer may be prepared by separately preparing a mixture of B-side reactants and blowing agent and A-side reactants, mixing them to prepare a developing foam, the developing foam is then deposited onto the UV-coated facer. A second facer material (either the UV-coated facer of a different facing material) may optionally be applied to the upper surface of the developing foam. The ultimate size of the resultant foam board may be manipulated by adjusting the height of the moving form, i.e., restrained rise, by adjusting the sides of the moving form to a desired width, and by cutting the continuous foam product to a desired length.

In one or more embodiments, the foam board may be described by the density of the foam material. In these or other embodiments, the foam board has a density or an average density of about 1 lbs/ft³ to about 25 lbs/ft³, and in other embodiments about 2 lbs/ft³ to about 23 lbs/ft³. In other embodiments, the foam board may have a density or an average density less than 2.5 lbs/ft³. In other embodiments, the foam board has a density or an average density of about 1 lb/ft³ to about 6 lbs/ft³, and in other embodiments about 2 lbs/ft³ to about 5 lbs/ft³.

In one or more embodiments, the coated nonwoven mat 100 may be included in a gypsum board. The gypsum board includes a gypsum core with two opposing sides and at least one coated nonwoven mat situated on one of the opposing sides. Wall boards formed of a gypsum core sandwiched between facing layers are commonly used in the construction industry as internal walls and ceilings for both residential and commercial buildings. Formulations and the design of the gypsum board may be tailored for the specific use desired for the board. In one or more embodiments, the gypsum core includes gypsum, optionally wet chopped glass fibers, water resistant chemicals, binders, accelerants, and low-density fillers. In one or more embodiments, the gypsum board may be prepared by providing a continuous layer of the coated nonwoven mat and depositing a gypsum slurry onto one surface of the coated nonwoven mat (typically the side opposite the coating composition). A second continuous layer of facing material (either the coated nonwoven mat 100 or a different facing material) is then applied to the opposite surface of the gypsum slurry. In this manner, the gypsum slurry is sandwiched between opposing layers of facing material. The sandwiched gypsum slurry is then adjusted to a desired thickness and dried to harden the gypsum core and form a gypsum board. In other embodiments, the application of the second facer is omitted to prepare a board with a single facer. Next, the gypsum board may be cut to predetermined dimensions (e.g., length) for end use.

In another application, the coated nonwoven mat 100 of the present disclosure may be used as a substrate for forming roofing shingles or a roofing underlayment. The coating layer 20 of the coated nonwoven mat 100 will prevent bleed-through of the asphalt/bitumen, whereas the asphalt/bitumen can wet out and bond to the portion of the nonwoven base layer 10 that is uncoated.

In another application, the coated nonwoven mat 100 of the present disclosure may be used as a substrate in the manufacture of flooring materials. For example, flooring products such as carpet tiles and vinyl tiles may have a discontinuous or uneven layer of plastisol or polyvinyl chloride (PVC) on a backing of the tiles due to plastisol or PVC bleed-through in the manufacturing process. The coated nonwoven mat 100 of the present disclosure may be used as a backing or reinforcement for flooring materials that prevents plastisol or PVC bleed-through and provides a smooth surface (via the coating layer 20) and allows plastisol or PVC wetting (via the nonwoven material) to form a strong bond between the coated nonwoven mat 100 and other structural portions of the flooring material, while also providing the flooring material with good dimensional stability and mechanical performance. In another application, the coated nonwoven mat 100 of the present disclosure may be used as a substrate in the manufacture of tile backer boards, including waterproof or light weight polyisocyanurate tile backer boards.

### Method of Production

The general inventive concepts further relate to a method of forming a coated nonwoven mat. The method of forming a coated nonwoven mat of the present disclosure comprises: a) depositing an aqueous fiber slurry onto a processing line to form a wet laid mat having a first major surface and a second major surface; b) applying a base layer binder composition to at least one of the first major surface and the second major surface of the wet laid mat; and c) heating the wet laid mat to cure the base layer binder composition, thereby forming the nonwoven mat. Any one or more of the fibers disclosed herein may be used in the methods of the present disclosure. In certain embodiments, the fibers are provided to a conveying apparatus such as a conveyor by a storage container for delivery to a mixing tank that contains various surfactants, viscosity modifiers, defoaming agents, and/or other chemical agents with agitation to disperse the fibers and to form an aqueous fiber slurry.

In accordance with the method of the present disclosure, the fiber slurry is deposited onto a processing line to form a wet laid mat having a first major surface and a second major surface. The processing line may be any suitable formation apparatus capable of forming a wet laid mat including, but not limited to, a moving screen or forming wire on an inclined wire forming machine, wire cylinders, Fourdrinier machines, Stevens former, Roto former, Inver former, or Venti former machines. While on the processing line, a substantial portion of the water from the fiber slurry is removed to form a wet laid mat of enmeshed, randomly oriented fibers. The water may be removed from the wet laid mat by a conventional vacuum or air suction system.

The method of the present disclosure also includes applying the base layer binder composition to at least one of the first surface and the second surface of the wet laid mat. The base layer binder composition may be any of the binder compositions previously described herein. The base layer binder composition may be applied to the wet laid mat using a suitable application method including, but not limited to, a binder wire, a spray applicator, a curtain coater, and a Foulard applicator.

In accordance with the method of the present disclosure, after the base layer binder composition is applied to the wet laid mat, the wet laid mat is heated to remove any residual water and cure the base layer binder composition, thereby forming the nonwoven mat. The step of heating the wet laid mat may be accomplished using any known heating or drying method. Suitable heating methods that may be used in the method of the present disclosure include, but are not limited to, a rotary/thru air dryer or oven, a heated drum dryer, an infrared heating source, a hot air blower, and a microwave emitting source. In certain embodiments, the heating step comprises exposing the wet laid mat having the base layer binder composition applied thereto to a temperature of 150 °C to 250 °C for a time period of up to 45 seconds.

The method of making the coated nonwoven mat also includes applying a coating layer including a coating composition to at least one of the first surface or the second surface of the nonwoven base layer to form a coated nonwoven mat. The coating composition may be applied to the nonwoven mat by conventional coating techniques such as spray coating, Meyer rod coating, slot die coating, blade/knife coating, forward roll coating, reverse roll coating, gravure coating, or curtain coating. The method of making the coated nonwoven mat also includes heating the coated nonwoven mat, thereby forming a finished coated nonwoven mat. The step of heating the coated nonwoven mat can take place in one or more ovens. An exemplary temperature range for drying is from 350 °F (177 °C) to 600 °F (316 °C). The step of heating the coated nonwoven mat can also include melting the coating composition onto the nonwoven base layer, allowing the coating composition to flow and create a more tightly sealed coating with lower porosity.

The method of the present disclosure may be used to make any of the various embodiments of coated nonwoven mats previously described herein. All references to singular characteristics or limitations of the present disclosure shall include the corresponding plural characteristic or limitation, and vice versa, unless otherwise specified or clearly implied to the contrary by the context in which the reference is made.

### EXAMPLES

In order to more thoroughly describe the general inventive concepts, the following examples are provided.

### Example 1

In this example, nonwoven glass mats having uncoated basis weight of 73 g/m², a LOI of 25%, and comprising a blend of 13 micron (70%) and 11 micron (30%) fibers were used as nonwoven base layers to form coated nonwoven mats, using one of the coating compositions depicted in Table 2, below. Each sample was tested using a Gurley Densometer in accordance with TAPPI Method T-460.

**TABLE 2**

| **Sample** | **Coating Formula** | **Gurley Air Perm** |
|---|---|---|
| Comparative EX. A | 7% Acrylic Binder and 93% 22 micron CaCO₃ - also includes dispersant and rheology modifier | 15 |
| Comparative EX. B | Traditional Coating - 7% acrylic binder, 93% 3 micron CaCO₃ - also includes dispersant and rheology modifier | 500+ |
| EX. A | 2% PVOH and 98% 22 micron CaCO₃ - no dispersant or rheology modifier | 300 |
| EX. B | 3.5 % PVOH and 96.5% 3 micron CaCO₃- no dispersant or rheology modifier | 4,153 +/- 700 |

As illustrated in Table 1, Example A is a dual-component coating composition comprising only a PVOH binder material and 22 micron calcium carbonate mineral filler, comprising only 2% organic material. Example A confirms that such a formulation can produce a coated nonwoven mat with a Gurley porosity of at least 300 seconds, compared to the use of similar calcium carbonate mineral filler in an acrylic binder-based coating composition (Comparative EX. A). Example B is also a dual-component coating composition, and comprises only a PVOH binder material and 3 micron calcium carbonate mineral filler, comprising only 3.5% organic material. Example B confirms that such a formulation can produce a coated nonwoven mat with a Gurley porosity of at least 4153 +/- 700 seconds, compared to the use of similar calcium carbonate mineral filler in an acrylic binder-based coating composition (Comparative EX. B). All combinations of method or process steps as used herein can be performed in any order, unless otherwise specified or clearly implied to the contrary by the context in which the referenced combination is made.

### Example 2

In this example, the nonwoven glass mats of Example 1 were used as nonwoven base layers to form coated nonwoven mats, using one of the coating compositions depicted in Table 3 and Table 4, below.

**TABLE 3**

| **Material** | **Weight Percent Solids** | **Particle Size** |
|---|---|---|
| Calcium Carbonate | 57.5 | 22 |
| Kaolin Clay | 18.5 | 0.2 |
| ATH | 20 | 9 |
| PVOH | 4 | - |

**TABLE 4**

| **Material** | **Weight Percent Solids** | **Particle Size** |
|---|---|---|
| Calcium Carbonate | 67.5 | 22 |
| Kaolin Clay | 28.5 | 0.2 |
| PVOH | 4 | - |

Each sample is expected to have a Gurley porosity of at least 1000 seconds.

### Example 3

In this example, the coating compositions depicted in Table 5, below, were formulated. Calorific values for individual components were determined via bomb calorimetry. The total calorific value for each coating composition was calculated from these values.

**TABLE 5**

| **Sample** | **Coating Formula** | **Calorific Value (MJ/kg)** |
|---|---|---|
| Comparative EX. A | 7.75% total organic content and 92.25% calcium carbonate | 1.61 |
| EX. A | 3% PVOH and 97% calcium carbonate | 0.17 |
| EX. B | 4% PVOH and 96% calcium carbonate | 0.41 |
| EX. C | 5% PVOH and 95% calcium carbonate | 0.66 |

For each sample, the calorific value was measured. The calorific value refers to the energy released per kilogram of coating. Lower calorific values are associated with reduced flame spread in standard tests such as E84 (Steiner Tunnel) and UL-94 (vertical and horizontal burn), as well as higher fire ratings for the nonwoven mats and final end products. The calorific value of Examples A (0.17 MJ/kg), Example B (0.41 MJ/kg) and Example C (0.66 MJ/kg) were substantially lower than Comparative Example A, which corresponds to a "standard coating."

All ranges and parameters, including but not limited to percentages, parts, and ratios, disclosed herein are understood to encompass any and all sub-ranges assumed and subsumed therein, and every number between the endpoints. For example, a stated range of "1 to 10" should be considered to include any and all subranges between (and inclusive of) the minimum value of 1 and the maximum value of 10; that is, all subranges beginning with a minimum value of 1 or more (*e.g.,* 1 to 6.1), and ending with a maximum value of 10 or less (*e.g.,* 2.3 to 9.4, 3 to 8, 4 to 7), and finally to each number 1, 2, 3, 4, 5, 6, 7, 8, 9, and 10 contained within the range.

The coated nonwoven mats of the present disclosure can comprise, consist of, or consist essentially of the essential elements and limitations of the disclosure as described herein, as well as any additional or optional components or limitations described herein or otherwise useful in nonwoven mat applications.

In some embodiments, it may be possible to utilize the various inventive concepts in combination with one another. Additionally, any particular element recited as relating to a particularly disclosed embodiment should be interpreted as available for use with all disclosed embodiments, unless incorporation of the particular element would be contradictory to the express terms of the embodiment. Additional advantages and modifications will be readily apparent to those skilled in the art. Therefore, the disclosure, in its broader aspects, is not limited to the specific details presented therein, the representative apparatus, or the illustrative examples shown and described. Accordingly, departures may be made from such details without departing from the spirit or scope of the general inventive concepts.

The scope of the general inventive concepts presented herein are not intended to be limited to the particular exemplary embodiments shown and described herein. From the disclosure given, those skilled in the art will not only understand the general inventive concepts and their attendant advantages, but will also find apparent various changes and modifications to the devices, systems, and methods disclosed. It is sought, therefore, to cover all such changes and modifications as fall within the spirit and scope of the general inventive concepts, as described and/or claimed herein, and any equivalents thereof.
Further aspects and features of the present invention are set out in the following numbered clauses.
1. A coated nonwoven mat comprising:
   a nonwoven base layer formed from a plurality of fibers held together by a binder, the nonwoven base layer having a first surface and a second surface; and
   a coating layer adhered to the first surface, wherein the coating layer comprises a coating composition, the coating composition comprising:
      0.5% to 5.0% of a binder material, based on the weight of the total solids in the coating composition; and
      95.0% to 99.5% of inorganic mineral filler, based on the weight of the total solids in the coating composition;
      wherein the coating composition comprises less than 5% of organic material, based on the weight of the coating composition;
   wherein the coating layer extends partially into the nonwoven base layer.
2. The coated nonwoven mat of clause 1, wherein the binder material is an organic polymeric binder material.
3. The coated nonwoven mat of any of clauses 1 or 2, wherein the coating composition comprises one or more of a polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.
4. The coated nonwoven mat of any of clauses 1-3, wherein the inorganic mineral filler comprises one or more of ground limestone (calcium carbonate), clay (kaolin), sand, mica, talc, gypsum (calcium sulfate dihydrate), aluminum trihydrate (ATH), vermiculite, or antimony oxide.
5. The coated nonwoven mat of any of clauses 1-4, wherein the inorganic mineral filler comprises particles having an average particle size of 15 microns to 30 microns.
6. The coated nonwoven mat of any of clauses 1-5, wherein the inorganic mineral filler comprises calcium carbonate having an average particle size of 20 microns to 25 microns.
7. The coated nonwoven mat of any of clauses 1-6, wherein the fibers comprise glass fibers.
8. The coated nonwoven mat of any of clauses 1-7, wherein the fibers have an average fiber thickness of 0.25 mm to 2 mm.
9. The coated nonwoven mat of any of clauses 1-8, wherein the fibers have an average fiber diameter of 5.5 microns to 23 microns.
10. The coated nonwoven mat of any of clauses 1-9, wherein the fibers have an average fiber length of 6.35 mm to 50.8 mm.
11. The coated nonwoven mat of any of clauses 1-10, wherein the nonwoven base layer has an uncoated basis weight of 65 g/m² to 75 g/m².
12. The coated nonwoven mat of any of clauses 1-11, wherein the coated nonwoven mat comprises a basis weight of 25 g/m² to 600 g/m².
13. The coated nonwoven mat of any of clauses 1-12, wherein the coated nonwoven mat comprises a loss on ignition of 5%-75%.
14. The coated nonwoven mat of any of clauses 1-13, wherein the coating layer has viscosity of 500 cP to 20,000 cP.
15. The coated nonwoven mat of any of clauses 1-14, wherein the coating layer has a coat weight of 10 g/m² to 500 g/m².
16. A polyisocyanurate foam board comprising at least one facer, wherein the at least one facer comprises a coated nonwoven mat according to any of clauses 1-15.
17. The polyisocyanurate foam board of clause 16, wherein the coated nonwoven mat has an average Gurley porosity of 200 seconds to 30,000 seconds.
18. A gypsum board comprising at least one facer, wherein the at least one facer comprises a coated nonwoven mat according to any of clauses 1-15.
19. The gypsum board of clause 18, wherein the coated nonwoven mat has an average Gurley porosity of 20 seconds to 100 seconds.
20. A method of making a coated nonwoven mat, the method comprising:
   providing a nonwoven base layer formed from a plurality of fibers held together by a binder, the nonwoven base layer having a first surface and a second surface;
   applying a coating composition to the first surface of the nonwoven base layer to form a coating layer on the nonwoven base layer, the coating composition comprising:
      0.5% to 5.0% of a binder material, based on the weight of the total solids in the coating composition; and
      95.0% to 99.5% of inorganic mineral filler, based on the weight of the total solids in the coating composition,
      wherein the coating composition comprises less than 5% of organic material, based on the weight of the coating composition,
      wherein the coating layer extends partially into the nonwoven base layer; and
   heating the nonwoven base layer with the coating layer to form the coated nonwoven mat.
21. The method of clause 20, wherein the binder material is an organic polymeric binder material.
22. The method of any of clauses 20-21, wherein the coating composition comprises one or more of a polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.
23. The method of any of clauses 20-22, wherein the inorganic mineral filler comprises one or more of ground limestone (calcium carbonate), clay (kaolin), sand, mica, talc, gypsum (calcium sulfate dihydrate), aluminum trihydrate (ATH), vermiculite, or antimony oxide.
24. The method of any of clauses 20-23, wherein the inorganic mineral filler comprises particles having an average particle size of 15 microns to 30 microns.
25. The method of any of clauses 20-24, wherein the inorganic mineral filler comprises calcium carbonate having an average particle size of 20 microns to 25 microns.
26. The method of any of clauses 20-25, wherein the fibers comprise glass fibers.
27. The method of any of clauses 20-26, wherein the fibers have an average fiber thickness of 0.25 mm to 2 mm.
28. The method of any of clauses 20-27, wherein the fibers have an average fiber diameter of 5.5 microns to 23 microns.
29. The method of any of clauses 20-28, wherein the fibers have an average fiber length of 6.35 mm to 50.8 mm.
30. The method of any of clauses 20-29, wherein the nonwoven base layer has an uncoated basis weight of 65 g/m² to 75 g/m².
31. The method of any of clauses 20-30, wherein the coated nonwoven mat comprises a basis weight of 25 g/m² to 600 g/m².
32. The method of any of clauses 20-31, wherein the coated nonwoven mat comprises a loss on ignition of 5%-75%.
33. The method of any of clauses 20-32, wherein the coating layer has viscosity of 500 cP to 20,000 cP.
34. The method of any of clauses 20-33, wherein the coating layer has a coat weight of 10 g/m² to 500 g/m².
35. A polyisocyanurate foam board comprising at least one facer, wherein the at least one facer comprises a coated nonwoven mat made according to any of clauses 20-34.
36. The polyisocyanurate foam board of clause 35, wherein the coated nonwoven mat has an average Gurley porosity of 200 seconds to 30,000 seconds.
37. A gypsum board comprising at least one facer, wherein the at least one facer comprises a coated nonwoven mat made according to any of clauses 20-34.
38. The gypsum board of clause 37, wherein the coated nonwoven mat has an average Gurley porosity of 20 seconds to 100 seconds.
39. A method of making a construction board, the method comprising:
   providing a nonwoven base layer formed from a plurality of fibers held together by a binder, the nonwoven base layer having a first surface and a second surface;
   applying a coating composition to the first surface of the nonwoven base layer to form a coating layer on the nonwoven base layer, the coating composition comprising:
      0.5% to 5.0% of a binder material, based on the weight of the total solids in the coating composition; and
      95.0% to 99.5% of inorganic mineral filler, based on the weight of the total solids in the coating composition,
      wherein the coating composition comprises less than 5% of organic material, based on the weight of the coating composition,
      wherein the coating layer extends partially into the nonwoven base layer;
   heating the nonwoven base layer with the coating layer to form the coated nonwoven mat; and
   applying the coated nonwoven mat onto a first side of a board to form a construction board, wherein the nonwoven base layer of the coated nonwoven mat is coupled with the first side of the board.
40. The method of clause 39, further comprising applying a second coated nonwoven mat onto a second side of a board opposite the first side, wherein the nonwoven base layer of the second coated nonwoven mat is coupled with the second side of the board.
41. The method of any of clauses 39-40, wherein the binder material is an organic polymeric binder material.
42. The method of any of clauses 39-41, wherein the coating composition comprises one or more of a polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.
43. The method of any of clauses 39-42, wherein the inorganic mineral filler comprises one or more of ground limestone (calcium carbonate), clay (kaolin), sand, mica, talc, gypsum (calcium sulfate dihydrate), aluminum trihydrate (ATH), vermiculite, or antimony oxide.
44. The method of any of clauses 39-43, wherein the inorganic mineral filler comprises particles having an average particle size of 15 microns to 30 microns.
45. The method of any of clauses 39-44, wherein the inorganic mineral filler comprises calcium carbonate having an average particle size of 20 microns to 25 microns.
46. The method of any of clauses 39-45, wherein the fibers comprise glass fibers.
47. The method of any of clauses 39-46, wherein the fibers have an average fiber thickness of 0.25 mm to 2 mm.
48. The method of any of clauses 39-47, wherein the fibers have an average fiber diameter of 5.5 microns to 23 microns.
49. The method of any of clauses 39-48, wherein the fibers have an average fiber length of 6.35 mm to 50.8 mm.
50. The method of any of clauses 39-49, wherein the nonwoven base layer has an uncoated basis weight of 65 g/m² to 75 g/m².
51. The method of any of clauses 39-50, wherein the coated nonwoven mat comprises a basis weight of 25 g/m² to 600 g/m².
52. The method of any of clauses 39-51, wherein the coated nonwoven mat comprises a loss on ignition of 5%-75%.
53. The method of any of clauses 39-52, wherein the coating layer has viscosity of 500 cP to 20,000 cP.
54. The method of any of clauses 39-53, wherein the coating layer has a coat weight of 10 g/m² to 500 g/m².
55. The method according to any of clauses 39-54, wherein the construction board is a polyisocyanurate foam board.
56. The method of clause 55, wherein the coated nonwoven mat has an average Gurley porosity of 200 seconds to 30,000 seconds.
57. The method according to any of clauses 39-54, wherein the construction board is a gypsum board.
58. The method of clause 57, wherein the coated nonwoven mat has an average Gurley porosity of 20 seconds to 100 seconds.
59. The coated nonwoven mat of any of clauses 1-15, wherein the coating composition comprises 0.1% to 4.5% of a cross linking agent, based on the weight of the total solids in the coating composition.
60. The coated nonwoven mat of clause 59, wherein the cross linking agent is an organic material.
61. The coated nonwoven mat of clause 59, wherein the cross linking agent is an inorganic material.
62. The coated nonwoven mat of any of clauses 1-15 or 59-61, wherein the coating composition comprises 0.1% to 4.5% of an acrylic component, based on the weight of the total solids in the coating composition.
63. The coated nonwoven mat of clause 62, wherein the acrylic component comprises a polymer or copolymer of acrylic acid, methacrylic acid, acrylates, methacrylates, acrylonitrile, vinyl versatate, and combinations thereof.
64. The coated nonwoven mat of any of clauses 1-15, wherein the coating composition comprises 0.5% to 4.8% of the binder, 0.1% to 4.4% of a cross linking agent, and 0.1% to 4.4% of an acrylic component, based on the weight of the total solids in the coating composition.
65. The coated nonwoven mat of any of clauses 1-15, wherein the inorganic mineral filler comprises a blend of two or more of calcium carbonate, mica, clay, and ATH.
66. The coated nonwoven mat of any of clauses 1-15 or 59-65, wherein the filler is a blend of at least two components, wherein the average particle size of each of the components is between 15 microns to 30 microns.
67. The coated nonwoven mat of any of clauses 1-15 or 59-66, wherein the filler is a blend of at least two components, wherein the average particle size of a first component is 0.01 microns to 15 microns and the average particle size of a second component is between 15 microns to 30 microns.
68. The coated nonwoven mat of any of clauses 1-15 or 59-67, wherein the calorific value of the coating composition is less than 1.00 MJ/kg.
69. The coated nonwoven mat of any of clauses 1-15 or 59-68, wherein the calorific value of the coating composition is less than 0.66 MJ/kg.
70. The coated nonwoven mat of any of clauses 1-15 or 59-69, wherein the calorific value of the coating composition is less than 0.50 MJ/kg.
71. The coated nonwoven mat of any of clauses 1-15 or 59-70, wherein the calorific value of the coating composition is less than 0.25 MJ/kg.
72. A coated nonwoven mat comprising:
   a nonwoven base layer formed from a plurality of fibers held together by a binder, the nonwoven base layer having a first surface and a second surface; and
   a coating layer adhered to the first surface, wherein the coating layer comprises a coating composition, the coating composition comprising:
      0.5% to less than 5.0% of a binder material, based on the weight of the total solids in the coating composition; and
      95.0% to 99.5% of an inorganic mineral filler comprising particles, wherein at least 50 wt.% of the inorganic mineral filler particles have an average particle size between 15 and 30 microns;
   wherein the coating composition comprises less than 5% of organic material, based on the weight of the coating composition;
   wherein the coating layer extends partially into the nonwoven base layer.
73. The coated nonwoven mat of clause 72, wherein the coating composition comprises 0.1% to 4.5% of a cross linking agent, based on the weight of the total solids in the coating composition.
74. The coated nonwoven mat of any of clauses 72-73, wherein the cross linking agent is an organic material.
75. The coated nonwoven mat of any of clauses 72-74, wherein the coating composition comprises 0.1% to 4.5% of an acrylic component, based on the weight of the total solids in the coating composition.
76. The coated nonwoven mat of any of clauses 72-75, wherein the acrylic component comprises a polymer or copolymer of acrylic acid, methacrylic acid, acrylates, methacrylates, acrylonitrile, vinyl versatate, and combinations thereof.
77. The coated nonwoven mat of any of clauses 72-76, wherein the coating composition comprises 0.5% to 4.8% of the binder, 0.1% to 4.4% of a cross linking agent, and 0.1% to 4.4% of an acrylic component, based on the weight of the total solids in the coating composition.
78. The coated nonwoven mat of any of clauses 72-77, wherein the inorganic mineral filler comprises a blend of two or more of calcium carbonate, mica, clay, and ATH.
79. The coated nonwoven mat of any of clauses 72-78, wherein less than 10 wt.% of the inorganic mineral filler comprises particles having an average particle size less than 5 microns.
80. The coated nonwoven mat of any of clauses 72-79, wherein the calorific value of the coating composition is less than 1.00 MJ/kg.
81. The coated nonwoven mat of any of clauses 1-4, wherein the inorganic mineral filler comprises particles having an average particle size of 0.01 microns to 15 microns.
82. The coated nonwoven mat of any of clauses 1-4, wherein the inorganic mineral filler comprises particles having an average particle size of 1 micron to 8 microns.
83. The coated nonwoven mat of any of clauses 1-4, wherein the inorganic mineral filler comprises particles having an average particle size of 3 micron to 5 microns.
84. The method of any of clauses 20-23, wherein the inorganic mineral filler comprises particles having an average particle size of 0.01 microns to 15 microns.
85. The method of any of clauses 20-23, wherein the inorganic mineral filler comprises particles having an average particle size of 1 micron to 8 microns.
86. The method of any of clauses 20-23, wherein the inorganic mineral filler comprises particles having an average particle size of 3 microns to 5 microns.
87. The method of any of clauses 39-43, wherein the inorganic mineral filler comprises particles having an average particle size of 0.01 microns to 15 microns.
88. The method of any of clauses 39-43, wherein the inorganic mineral filler comprises particles having an average particle size of 1 micron to 8 microns.
89. The method of any of clauses 39-43, wherein the inorganic mineral filler comprises particles having an average particle size of 3 microns to 5 microns.

## Claims

1. A method of making a construction board, the method comprising:
providing a nonwoven base layer formed from a plurality of fibers held together by a binder, the nonwoven base layer having a first surface and a second surface;
applying a coating composition to the first surface of the nonwoven base layer to form a coating layer on the nonwoven base layer, the coating composition comprising:
0.5% to 5.0% of a binder material, based on the weight of the total solids in the coating composition; and
95.0% to 99.5% of inorganic mineral filler, based on the weight of the total solids in the coating composition,
wherein the coating composition comprises less than 5% of organic material,
based on the weight of the total solids in the coating composition, wherein the coating layer extends partially into the nonwoven base layer; heating the nonwoven base layer with the coating layer to form the coated nonwoven mat; and
applying the coated nonwoven mat onto a first side of a board to form a construction board, wherein the nonwoven base layer of the coated nonwoven mat is coupled with the first side of the board;
wherein the binder material in the coating composition is an organic polymeric binder material.

2. The method of claim 1, further comprising applying a second coated nonwoven mat onto a second side of a board opposite the first side, wherein the nonwoven base layer of the second coated nonwoven mat is coupled with the second side of the board.

3. The method of any of claims 1-2, wherein the coating composition comprises one or more of a polyvinyl alcohol, polyvinyl acetate, polyvinyl pyrrolidone, polyacrylic acid, copolymers of polyvinyl alcohol, polyvinyl acetate, and polyvinyl pyrrolidone, urea formaldehyde polymers, melamine formaldehyde polymers, and phenol formaldehyde polymers, or combinations thereof.

4. The method of any of claims 1-3, wherein the coating composition includes one or more cross-linking agents; optionally, wherein the cross-linking agents in the coating composition represent less than 5% by weight of the total solids in the coating composition.

5. The method of any of claims 1-4, wherein the inorganic mineral filler comprises:
• one or more of ground limestone (calcium carbonate), clay (kaolin), sand, mica, talc, gypsum (calcium sulfate dihydrate), aluminum trihydrate (ATH), vermiculite, or antimony oxide; and/or
• particles having an average particle size of 15 microns to 30 microns; optionally particles having an average particle size of 0.01 microns to 15 microns.

6. The method of any of claims 1-5, wherein the binder comprises polyvinyl alcohol and the filler comprises calcium carbonate.

7. The method of any of claims 1-6, wherein the fibers comprise glass fibers.

8. The method of any of claims 1-7, wherein the fibers have:
• an average fiber diameter of 5.5 microns to 23 microns; and/or
• an average fiber length of 6.35 mm to 50.8 mm.

9. The method of any of claims 1-8, wherein the nonwoven base layer has:
• an uncoated basis weight of 30 g/m² to 200 g/m²; optionally an uncoated basis weight of 65 g/m² to 75 g/m²; and/or
• a thickness of 0.25 mm to 2 mm; and/or
• a loss on ignition (LOI) of 5%-75%.

10. The method of any of claims 1-9, wherein the coated nonwoven mat comprises a basis weight of 25 g/m² to 600 g/m².

11. The method of any of claims 1-10, wherein the coating layer has:
• a coat weight of 10 g/m² to 500 g/m²; and/or
• a thickness of 1 micron to 1000 microns.

12. The method according to any of claims 1-11, wherein the construction board is a polyisocyanurate foam board; optionally wherein the coated nonwoven mat has an average Gurley porosity of 200 seconds to 30,000 seconds.

13. The method according to any of claims 1-11, wherein the construction board is a gypsum board; optionally wherein the coated nonwoven mat has an average Gurley porosity of 20 seconds to 100 seconds.

14. The method according to claim 1, wherein the nonwoven base layer has an uncoated basis weight of 25 g/m² to 300 g/m².

15. A construction board made according to the method of any one of claims 1 to 14.
